Europäisches Patentamt

European Patent Office

Office européen des brevets

(19)

(11) Numéro de publication: **0 032 697**
**A1**

(12) ## DEMANDE DE BREVET EUROPEEN

(21) Numéro de dépôt: **81100136.1**

(22) Date de dépôt: **12.01.81**

(51) Int. Cl.³: **H 01 M 4/68,** H 01 M 4/73, H 01 M 2/28

---

(30) Priorité: **18.01.80 FR 8001065**

(71) Demandeur: **COMPAGNIE EUROPEENNE D'ACCUMULATEURS Société anonyme dite:, 16, rue de la Baume, F-75008 Paris (FR)**

(72) Inventeur: **Rigal, Michel, 29, rue Victor Renard, F-59000 Lille (FR)**
Inventeur: **Saerens, Jean, 53, avenue de la Pépinière, F-59320 Haubourdin (FR)**

(74) Mandataire: **Weinmiller, Jürgen et al, Zeppelinstrasse 63, D-8000 München 80 (DE)**

(43) Date de publication de la demande: **29.07.81**
**Bulletin 81/30**

(84) Etats contractants désignés: **AT BE CH DE FR GB IT LI LU NL SE**

---

(54) **Electrode pour accumulateur au plomb.**

(57) Electrode (1) pour accumulateur au plomb comportant une matière active (8), un support de matière active et au moins un conducteur électrique comprenant une âme (10) en un métal présentant une conductibilité électrique supérieure à celle du plomb.

Ladite âme est recouverte d'une couche protectrice (11) en un matériau choisi parmi le titane, le tungstène, le tantale, le niobium, le zirconium et leurs alliages.

Electrode pour accumulateur au plomb

La présente invention concerne une électrode pour accumulateur au plomb. On sait qu'une telle électrode comporte une matière active logée dans un support et des collecteurs de courant. Dans le cas de plaques du type à grille, cette dernière est réalisée en plomb ou en alliage de plomb et sert à la fois de support et de collecteur de courant ; mais l'électrode peut comporter également des collecteurs de courant supplémentaires, extérieurs à la grille proprement dite, et servant à la relier à des électrodes voisines, ou à une borne terminale.

Dans le cas de plaques de type tubulaire, la matière active est logée dans des pochettes et les collecteurs de courant sont constitués notamment par des épines enfilées dans les pochettes et reliées à un cadre ; l'ensemble épines-cadre est en plomb ou alliage de plomb et peut être connecté à des collecteurs de courant extérieurs au cadre, comme dans le cas des plaques à grille.

Dans tous les cas, et pour les électrodes positives ou négatives, il est nécessaire d'accroître le plus possible la conductibilité électrique des collecteurs de courant, qu'ils soient en contact ou non avec la matière active.

On a donc déjà proposé de mettre en oeuvre des collecteurs de courant en un matériau présentant une conductibilité électrique supérieure à celle du plomb, tel que par exemple le cuivre ou l'aluminium ; on a proposé également de recouvrir ce collecteur d'une couche protectrice en fer, en alliage plomb-étain etc...

Toutefois, on sait qu'au cours du fonctionnement de l'accumulateur au plomb, les électrodes positives subissent une corrosion très importante ; par exemple dans le cas des plaques à grille, il arrive que, par suite d'un défaut accidentel de moulage de cette grille, ou simplement en fin de vie de l'accumulateur, de l'acide sulfurique pénètre au coeur de la grille. Si dans cette grille est intégré un conducteur en cuivre ou en aluminium muni des revêtements connus, ce conducteur se trouve très rapidement totalement détruit. Dans le cas du cuivre, ce dernier migre vers l'électrode négative et entraîne une autodécharge rapide de l'accumulateur.

La présente invention a pour but d'éviter ces inconvénients.

La présente invention a pour objet une électrode pour accumulateur au plomb comportant une matière active, un support de matière active et au moins un conducteur électrique comprenant une âme en un métal présentant une conductibilité électrique supérieure à celle du plomb, caractérisée par le fait que ladite âme est recouverte d'une couche protectrice en un matériau choisi parmi le titane, le tungstène, le tantale, le niobium, le zirconium et leurs alliages.

L'âme est en un matériau choisi parmi le cuivre, l'aluminium, l'argent, le zinc et les alliages de chacun de ces métaux.

Selon une première variante, ledit conducteur est intégré dans le support de la matière active proprement dit, c'est-à-dire dans un montant du cadre de l'électrode et/ou au moins un barreau de la grille, dans le cas d'une électrode à grille. L'âme recouverte de sa couche protectrice est donc enrobée dans du plomb ou un alliage de plomb.

Selon une seconde variante, ledit conducteur est extérieur au support de la matière active et la couche protectrice est soudée au cadre de l'électrode en plomb ou en alliage de plomb, de manière que le cadre vienne au contact électrique du matériau de l'âme.

Lorsque de l'acide sulfurique parvient au niveau de la couche en un des matériaux choisi parmi le titàne, le tungstène, le tantale, le niobium, le zirconium, et leurs alliages, cette couche se transforme en une couche d'oxyde du matériau correspondant, passivante, parfaitement inaltérable à l'acide sulfurique.

Dans le cas de la première variante, comme on l'a précisé plus haut, ce phénomène n'arrive qu'en cas d'accident local ou qu'en fin de vie de l'accumulateur. La présence d'une petite zone d'oxyde autour du cuivre ne modifie pas de manière sensible la conductibilité du support de l'électrode et l'accumulateur continue à fonctionner normalement.

Dans le cas de la seconde variante, la couche protectrice se transforme immédiatement en couche d'oxyde dès que l'électrode est plongée dans l'acide sulfurique et le contact électrique entre l'âme du conducteur et le cadre de l'électrode est parfaitement préservé.

Selon les deux variantes, l'âme peut présenter la forme d'un fil, d'une lame ou d'un barreau.

L'épaisseur de la couche protectrice est de préférence inférieure à 500 µm, et par exemple de l'ordre de 100 µm.

L'invention a également pour objet un procédé de fabrication des deux variantes de réalisation. On obtient dans les deux cas l'âme munie latéralement de sa couche protectrice par une opération de cofilage ou de coétirage. On protège les extrémités de cette âme, soit par soudure des extrémités de la couche protectrice (par exemple par bombardement électronique), soit par un bouchon en résine synthétique, soit par un bouchon en plomb soudé aux extrémités de la couche protectrice.

Selon la première variante, le conducteur ainsi obtenu est disposé dans le moule du support de l'électrode avant son remplissage par du plomb fondu ou de l'alliage de plomb fondu. On peut prévoir également un support d'électrode muni d'un logement destiné à recevoir le conducteur et on ferme ce logement au plomb ou à l'alliage de plomb.

Selon la seconde variante, on soude le conducteur à des parties en plomb ou en alliage de plomb du cadre de l'électrode, ou d'une jonction connectée à ce cadre.

D'autres caractéristiques et des avantages de la présente invention apparaîtront au cours de la description suivante qui sera faite à l'aide du dessin annexé donné à titre illustratif dans lequel :

- la figure 1 est une vue partielle semi-déchirée d'une première variante d'électrode positive à grille selon l'invention,

- la figure 2 est une vue partielle en coupe selon la ligne II-II de la figure 1.

- la figure 3 est une vue partielle en coupe de l'électrode de la figure 2 accompagnée de deux séparateurs et de deux électrodes négatives,

- la figure 4 illustre schématiquement en coupe partielle la seconde variante d'électrode selon l'invention munie d'un conducteur extérieur à son cadre.

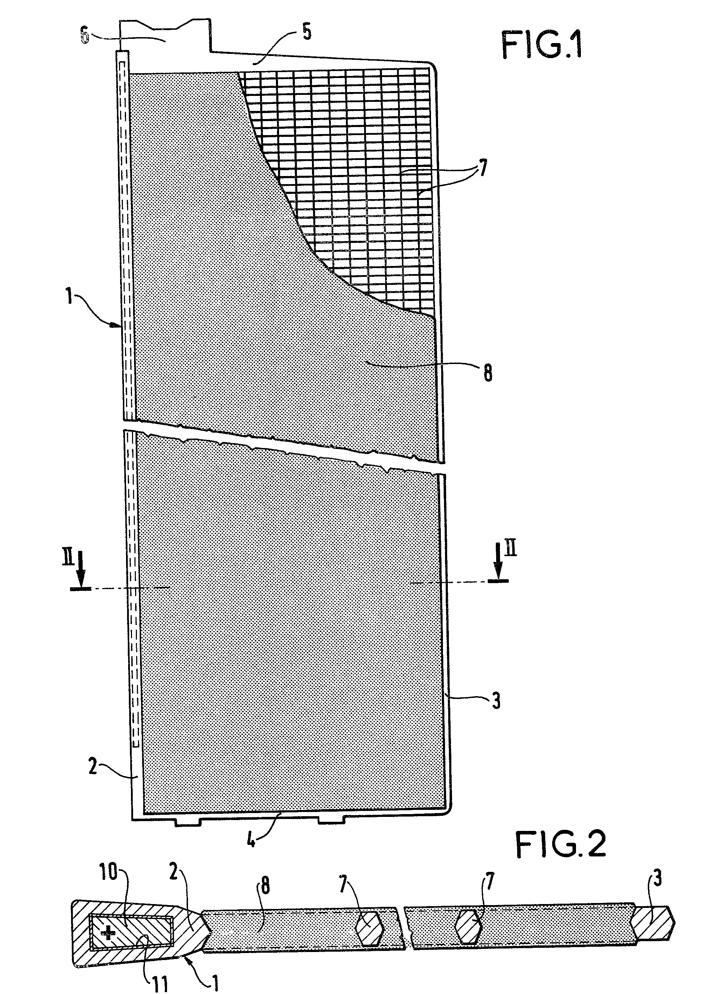

Sur la figure 1, on a illustré une électrode positive 1 du type à grille ; le support de la matière active 8 est constitué par une grille formée de barreaux 7 et entourée d'un cadre dont les montants sont référencés 2, 3, 4 et 5 ; le montant horizontal supérieur 5 est muni d'une queue de plaque 6 ; l'ensemble du support .st en alliage de plomb à l'antimoine.

Selon l'invention, le montant vertical 2 contient un conducteur électrique présentant une âme de cuivre 10 revêtue d'une couche de itane 11. (voir figure 2).

A titre d'exemple, l'électrode présente les caractéristiques dimensionnelles suivantes :

hauteur : 90 cm environ

largeur : 30 cm environ

longueur du conducteur : 82 cm

section de l'âme en cuivre : 24 $mm^2$

épaisseur de la couche de titane : 100 microns.

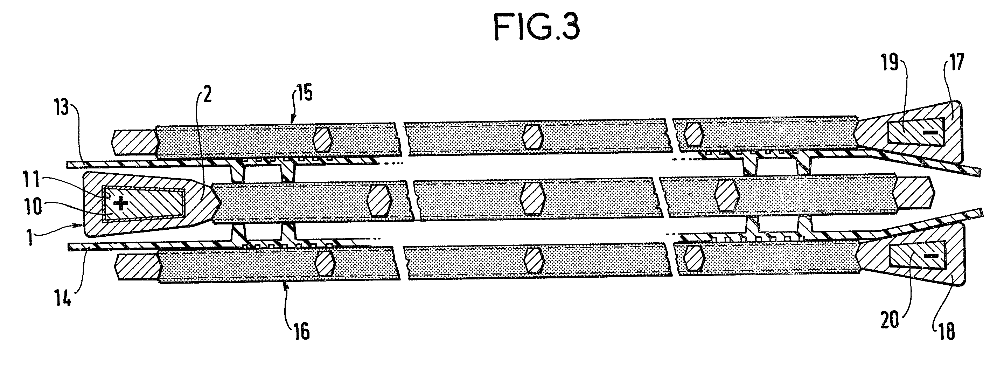

L'électrode positive 1 munie de son conducteur est introduite dans un accumulateur entre deux électrodes négatives 15 et 16. (voir figure 3). Des séparateurs 13 et 14 sont interposés entre l'électrode 1 et les électrodes négatives 15 et 16. Les montants 17 et 18 des électrodes négatives comportent des conducteurs intégrés en cuivre 19 et 20 ; ces conducteurs ne sont pas nécessairement munis d'une couche protectrice car les électrodes négatives ne sont pas soumises à la corrosion comme les électrodes positives. On peut remarquer la disposition particulière des extrémités des séparateurs 13 et 14 au voisinage des montants 17 et 18 de manière à compenser la surépaisseur de ces montants vis-à-vis du reste de l'électrode. Cette surépaisseur pourrait être supprimée si les conducteurs 19 et 20 étaient munis d'une couche protectrice, ce qui permettrait de réduire l'épaisseur de leur revêtement de plomb. On a soumis un accumulateur de l'art antérieur et un accumulateur selon l'invention à une décharge rapide en une heure, et on a mesuré les potentiels à la surface d'une électrode positive de chacun d'eux en prenant comme potentiel de référence, celui de la queue de l'électrode.

Dans l'électrode positive de l'art antérieur, on a mesuré 163 mV entre la queue et le bas de l'électrode. Dans l'électrode positive munie de son conducteur 10, on a mesuré 67 mV.

Il apparaît donc clairement que les électrodes positives selon l'invention présentent une hétérogénéité de potentiel très diminuée par rapport à celle des électrodes de l'art antérieur. Il est très important de minimiser cette hétérogénéité qui apparaît surtout sur les électrodes de grandes dimensions, car on peut ainsi les décharger plus profondément.

On a décrit un conducteur unique intégré dans un montant vertical de l'électrode ; on peut en intégrer d'autres aussi bien dans les montants que les barreaux eux-mêmes afin de diminuer encore l'hétérogénéité des potentiels.

Le cadre décrit peut être aussi bien celui d'une électrode où la matière active est disposée dans des gaines tubulaires.

Bien entendu, le cuivre peut être remplacé par l'un des matériaux cités plus haut : il en est de même pour le titane.

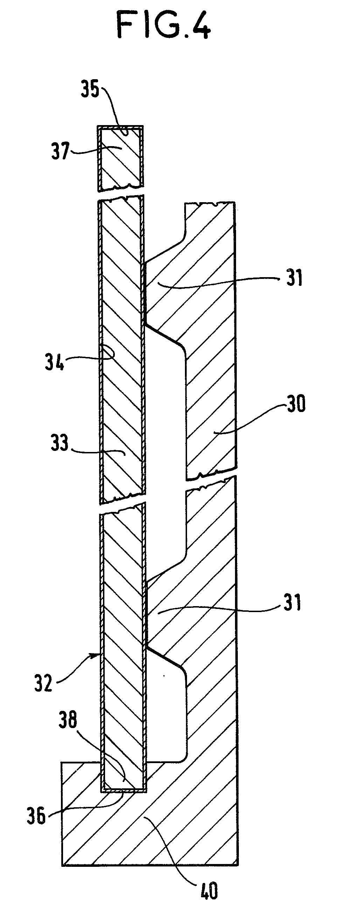

La figure 4 illustre très schématiquement en coupe partielle un montant d'électrode 30 (qui peut être du type à grille ou du type tubulaire) présentant des zones 31 soudées à un collecteur de courant extérieur 32 ; ce collecteur comporte une âme de cuivre (ou équivalent) revêtue d'une couche protectrice 34 (ou équivalent) ; les extrémités 37 et 38 de l'âme sont protégées par les extrémités 35 et 36 de la couche protectrice soudées par exemple par bombardement électronique. L'extrémité 38 revêtue est enrobée dans l'extrémité 40 du montant de l'électrode.

Bien entendu, l'invention n'est pas limitée aux exemples qui viennent d'être décrits. On pourra, sans sortir du cadre de l'invention, remplacer toute disposition par une disposition équivalente.

REVENDICATIONS

1/ Electrode (1) pour accumulateur au plomb comportant une matière active (8), un support de matière active et au moins un conducteur électrique comprenant une âme (10) en un métal présentant une conductibilité électrique supérieure à celle du plomb, caractérisée par le fait que ladite âme (10) est enrobée d'une couche protectrice (11) en un matériau choisi parmi le titane, le tungstène, le tantale, le niobium, le zirconium et leurs alliages.

2/ Electrode pour accumulateur au plomb selon la revendication 1, caractérisée par le fait que ladite âme (10) est en un matériau choisi parmi le cuivre, l'aluminium, l'argent, le zinc et les alliages de chacun de ces métaux.

3/ Electrode pour accumulateur au plomb selon l'une des revendications précédentes, caractérisée par le fait que ladite âme présente la forme d'un fil.

4/ Electrode pour accumulateur au plomb selon l'une des revendications 1 et 2, caractérisée par le fait que ladite âme présente la forme d'une lame.

5/ Electrode pour accumulateur au plomb selon l'une des revendications 1 et 2, caractérisée par le fait que ladite âme présente la forme d'un barreau.

6/ Electrode pour accumulateur au plomb selon l'une des revendications précédentes, caractérisée par le fait que l'épaisseur de la couche protectrice (11) de l'âme (10) est inférieure à 500 $\mu$m.

7/ Electrode pour accumulateur au plomb selon la revendication 6, caractérisée par le fait que ladite épaisseur est de l'ordre de 100 $\mu$ m.

8/ Electrode pour accumulateur au plomb selon l'une des revendications précédentes, caractérisée par le fait que ledit conducteur électrique est intégré dans le support (2) en plomb ou en alliage de plomb de la matière active et que l'âme recouverte de sa couche protectrice est ainsi enrobée dans du plomb ou un alliage de plomb.

9/ ELectrode pour accumulateur au plomb selon l'une des revendications 1 à 7, caractérisée par le fait que ledit conducteur (32) est extérieur au support de la matière active et que sa couche protectrice (34, 35, 36) est soudée à au moins une partie en plomb (31) de ce support.

0032697

10/ Procédé de fabrication d'une électrode selon la revendication 8, caractérisé par le fait que l'on réalise l'âme munie de sa couche protectrice suivant sa partie latérale, que l'on protège ses extrémités, qu'on l'insère dans un logement prévu dans le support de l'électrode, et que l'on ferme ce logement au plomb fondu ou à l'alliage de plomb fondu.

11/ Procédé de fabrication d'une électrode selon la revendication 9, caractérisé par le fait que l'on réalise l'âme munie de sa couche protectrice suivant sa partie latérale, que l'on protège ses extrémités et qu'on soude la couche protectrice à au moins une partie en plomb de ce support.

12/ Procédé de fabrication selon l'une des revendications 10 et 11, caractérisé par le fait que l'on protège les extrémités de l'âme par soudure des extrémités de la couche protectrice.

13/ Procédé de fabrication selon l'une des revendications 10 et 11, caractérisé par le fait que l'on isole les extrémités de l'âme par un bouchon en un matériau choisi parmi le plomb et les résines synthétiques.

0032697

FIG.1

FIG.2

## FIG.3

## FIG.4

Office européen
des brevets

**RAPPORT DE RECHERCHE EUROPEENNE**

0032697

Numéro de la demande

EP 81 10 0136

| Catégorie | DOCUMENTS CONSIDERES COMME PERTINENTS | | CLASSEMENT DE LA DEMANDE (Int. Cl. ³) |
|---|---|---|---|
| | Citation du document avec indication, en cas de besoin, des parties pertinentes | Revendication concernée | |
| X | <u>US - A - 4 037 031</u> (W.R. JACOB)<br><br>* Colonne 1, ligne 58 à colonne 2, ligne 20; colonne 2, lignes 63-65; figure 2; colonne 3, ligne 42 à colonne 4, ligne 41; colonne 6, lignes 23-24 et 30-32 *<br>--- | 1,2,4, 6-8 | H 01 M 4/68<br>4/73<br>2/28 |
| | <u>US - A - 3 905 828</u> (A.C. BARBER)<br><br>* Figure 1, revendications 1,12,21; colonne 3, ligne 57 à colonne 4, ligne 2; colonne 3, lignes 12-17 *<br>--- | 1-3,5 | |
| | <u>GB - A - 2 009 491</u> (E.S.B.)<br><br>* Revendications 1,5,17,18; figure 12; page 6, lignes 47-51; figures 5-6; page 5, ligne 60 à page 6, ligne 8; page 10, lignes 1-9 *<br>--- | 1-3,5, 8-11 | DOMAINES TECHNIQUES RECHERCHES (Int. Cl. ³)<br><br>H 01 M 4/68<br>4/73<br>4/66<br>4/64<br>4/74<br>4/14 |
| A | <u>DE - A - 2 415 032</u> (A.B. TUDOR)<br><br>* Revendications 1,8; page 9, lignes 1-11; figure 1 *<br>--- | 10,12 | |
| A | <u>US - A - 2 739 997</u> (L.L. CARRICK et al.)<br><br>* Revendication 2; figures 11,12; colonne 4, lignes 60-65; colonne 5, ligne 69 à colonne 6, ligne 19 *<br>--- | 10 | CATEGORIE DES DOCUMENTS CITES<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| A | <u>DE - A - 2 404 642</u> (ACCUMULATOREN FABRIKEN WILHELM HAGEN)<br><br>* Revendications 1-3,5,15,17; page 9; paragraphes 1,2; figures 1-8 * | 9,11 | |

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10.04.1981 | D'HONDT |

OEB Form 1503.1 06.78